# EUROPÄISCHE PATENTSCHRIFT

(11) **EP 1 450 229 B1**
(45) Veröffentlichungstag und Bekanntmachung des Hinweises auf die Patenterteilung: **01.07.2009**
(21) Anmeldenummer: 03027492.2
(22) Anmeldetag: 01.12.2003
(51) Int. Cl.: G05D 7/00, H02P 6/12

(54) **Schaltungsanordnung zur Lüfterregelung**
Circuit arrangement for control of a fan
Agencement de circuit pour le contrôle d'un ventilateur

(30) Priorität: 24.02.2003 DE 10307823
(43) Veröffentlichungstag der Anmeldung: 25.08.2004
(73) Patentinhaber: Fujitsu Siemens Computers GmbH, 80807 München (DE)
(72) Erfinder: Busch, Peter, 86179 Augsburg (DE)
(74) Vertreter: Epping - Hermann - Fischer

(56) Entgegenhaltungen:
- WO-A-01/82465
- WO-A-02/17473
- DE-A1- 10 036 413
- US-A- 5 517 095

## Beschreibung

Die Erfindung betrifft eine Schaltungsanordnung zur Lüfterregelung mit einem Eingang zum Empfang einer einem Lüfterstrom proportionalen Eingangsspannung, die eine erste Vergleichsspannung bildet, einem Tiefpaß-Filter, das die Eingangsspannung filtert und an dessen Ausgang eine Filterausgangsspannung als zweite Vergleichsspannung abgreifbar ist, einer ersten Vergleichsvorrichtung zur Kommutierungserkennung, die an ihrem Ausgang ein eine Kommutierung anzeigendes Signal ausgibt, wenn der mit einen ersten Faktor multiplizierte Wert einer der Vergleichsspannungen größer als die andere Vergleichsspannung ist, und einem Regler, der in Abhängigkeit erkannter Kommutierungsimpulse eine Lüftersteuerspannung ausgibt.

Eine solche Schaltungsanordnung ist zur Erkennung von Kommutierungsimpulsen und zur Lüfterregelung in Abhängigkeit der erkannten Kommutierungsimpulse geeignet. Je nachdem, welche Vergleichsspannung mit dem Faktor multipliziert wird, werden positive oder negative Kommutierungsimpulse erkannt.

Derartige Schaltungsanordnungen zur Lüfterregelung werden eingesetzt, da Netzteile höherer Leistung zu ihrer Kühlung elektronisch kommutierte Lüfter benötigen. Zur Kontrolle und zu Regelzwecken muß die Drehzahl elektronisch erfaßt werden.

Bisher ist es bekannt, Speziallüfter einzusetzen, die ein internes Taktsignal der elektronischen Kommutierung über eine zusätzliche Leitung nach außen führen, so daß eine externe Lüfterregelung auf dieses Signal zugreifen kann. Solche Speziallüfter sind jedoch verhältnismäßig teuer.

Außerdem ist es bekannt, Standardlüfter einzusetzen und durch Erfassung der Stromschwankungen des Lüfters über einen Strommeßwiderstand, der zu dem Lüfter in Reihe geschaltet ist, und Auskopplung der Stromschwankungen über einen Hochpaß oder durch Differenzierung und anschließender Impulsformung die Kommutierungen zu erkennen. Der Vorgang der Kommutierung ist dadurch erkennbar, daß sich der Strom zu diesem Zeitpunkt in sehr kurzer Zeit stark ändert. Die Änderungsgeschwindigkeit liegt mindestens um den Faktor 10 höher als die Änderungsgeschwindigkeit des Stromes, der durch die Gegen-EMK des Motors hervorgerufen wird. Bisher wurden diese Kommutierungsimpulse ausgekoppelt, indem man ihren Gleichstromanteil entfernte und auf geeignete Weise aus dem verbleibenden Wechselstromanteil die Anteile mit hoher Änderungsgeschwindigkeit zu Impulsen formte. Dabei sind sowohl Verfahren bekannt, die mit Hilfe eines Kondensators arbeiten, als auch Verfahren, die auf digitaler Basis mit Digital/Analog-Wandlern arbeiten. Eine solche Schaltung bzw. ein solches Verfahren sind beispielsweise aus der US 4,721,865 bekannt. Sowohl die analogen als auch die digitalen Schaltungsanordnungen zur Lüfterregelung bzw. zur Erkennung von Kommutierungsimpulsen sind auf einen bestimmten Lüftertyp abgestimmt, da die Höhe und Steilheit der Kommutierungsimpulse stark von dem verwendeten Lüftertyp abhängt. Die bekannten Schaltungsanordnungen funktionieren aber nicht zufriedenstellend, wenn man mit einer bestehenden Schaltungsanordnung zur Lüfterregelung verschiedene Lüftertypen oder Lüfterfabrikate ohne Einstellungsänderungen betreiben will.

Um verschiedene Lüftertypen mit unterschiedlichem Betriebsstrom überwachen zu können, kann man die maximale Änderungsgeschwindigkeit des Lüfterstroms erfassen und einen bestimmten Prozentsatz davon als Schaltschwelle für die Erkennung einer Kommutierung verwenden. Diese Vorgehensweise hat jedoch einen gravierenden Nachteil. Wenn der Lüfter blockiert, muß die Blockierung für eine angeschlossene Überwachungseinheit erkennbar sein. Es muß vermieden werden, daß Spannungs- bzw. Stromschwankungen fälschlicherweise als Lüfterkommutierungsimpulse erkannt werden, wenn sich der Lüfter nicht dreht.

Findet wegen Blockierung des Lüfters keine Kommutierung mehr statt, wird der Betriebsstrom normalerweise nicht mehr schwanken, und der Wechselstromanteil geht gegen Null. Daher sinkt die Schaltschwelle für die Erkennung eines Kommutierungsimpulses auf einen minimalen Wert. Schwankt nun die Betriebsspannung des blockierten Lüfters, ohne daß dieser sich dreht, so schwankt auch der Strom des blockierten Lüfters, da dieser bei Blockierung ohmsches Verhalten zeigt. Dadurch erkennt die Kommutierungserkennung fälschlicherweise Impulse, obwohl der Lüfter blockiert ist. Dadurch kann ein blockierter Lüfter nicht zuverlässig erkannt werden. Eine Schwankung der Betriebsspannung wird immer dann auftreten, wenn andere Verbraucher am gleichen Netzteil Lastsprünge erzeugen, z.B. Festplatten oder Prozessoren mit aktivierter Energiesparfunktion.

Aufgabe der Erfindung ist es daher, eine Schaltungsanordnung zur Lüfterregelung anzugeben, die zuverlässig Kommutierungsimpulse erkennt und dabei auch ohne Änderung von Einstellungen mit verschiedenen Lüftertypen eingesetzt werden kann.

Diese Aufgabe wird durch einer Schaltungsanordnung der eingangs genannten Art gelöst, die dadurch gekennzeichnet ist, daß eine zweite Vergleichsvorrichtung vorgesehen ist; die an ihrem Ausgang mit einem Ausgangssignal anzeigt, wenn der mit einem zweiten Faktor multiplizierte Wert einer der Vergleichsspannungen größer als die andere Vergleichsspannung ist, wobei der zweite Faktor kleiner als der erste Faktor ist, und eine Steuereinrichtung vorgesehen ist, durch die der erste und der zweite Faktor bei Empfang eines Ausgangssignals der zweiten Vergleichsvorrichtung verkleinerbar sind zur Verringerung der Empfindlichkeit der Kommutierungserkennung.

Durch die kennzeichnenden Merkmale der erfindungsgemäßen Schaltungsanordnungen ist eine selbsteinstellende Auswertung von Stromverhältnissen realisiert. Das beispielsweise von einem Strommeßwiderstand kommende und verstärkte Eingangssignal wird auf ein Tiefpaß-Filter großer Steilheit geführt. Die Grenzfrequenz wird so eingestellt, daß der niederfrequente Lüfterstromanteil, der durch die Gegen-EMK verursacht wird, ohne nennenswerte Änderung passieren kann, während der höherfrequente Lüfterstromanteil, der durch die interne Umschaltung der Lüfterantriebsspule, also die Kommutierung, entsteht, unterdrückt wird. Auf diese weise ist durch die erste Vergleichsvorrichtung aus dem Unterschied zwischen der ungefilterten Eingangsspannung und der Filterausgangsspannung erkennbar, ob ein Kommutierungsimpuls vorliegt. Da die Höhe der Spannungen je nach Betriebssituation und verwendetem Lüfter schwankt, wird das Verhältnis der Spannungen ausgewertet.

Eine Anpassung an verschiedene Lüftertypen ist dadurch ermöglicht, daß eine der beiden Vergleichsspannungen mit einem ersten Faktor multipliziert wird, der veränderbar ist. Die dafür eingesetzten Mittel können ein Spannungsteiler sein. Die Selbsteinstellung der Empfindlichkeit wird dadurch realisiert, daß die zweite Vergleichsvorrichtung vorgesehen ist, die die mit einem zweiten Faktor multiplizierte Vergleichsspannung auswertet. Somit wird erkannt, wenn die Spannung eines Kommutierungsimpulses besonders hoch ist. Das Ausgangssignal der zweiten Vergleichsvorrichtung wird dazu eingesetzt, die Empfindlichkeit der Kommutierungserkennung zu verringern.

In einer Weiterbildung der Erfindung kann vorgesehen werden, ein ständiges Hoch- und Runterschalten der Faktoren, d.h. der Empfindlichkeit, zu verhindern, indem eine dritte Vergleichsvorrichtung vorgesehen wird, an deren Eingang die mit einem dritten Faktor multiplizierte Vergleichsspannung anliegt, wobei der dritte Faktor zwischen dem ersten und dem zweiten Faktor liegt. Bei Vorliegen eines Ausgangssignals der dritten Vergleichsvorrichtung wird eine Verkleinerung des ersten und zweiten Faktors durch die Steuereinrichtung verzögert und erfolgt nur dann, wenn zum Zeitpunkt eines erwarteten nachfolgenden Kommutierungsimpulses wieder ein Ausgangssignal des zweiten Komparators vorliegt.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
Figur 1 ein Prinzipschaltbild eines ersten Ausführungsbeispiels einer erfindungsgemäßen Schaltungsanordnung und
Figur 2 ein Prinzipschaltbild eines zweiten Ausführungsbeispiels einer erfindungsgemäßen Schaltungsanordnung.

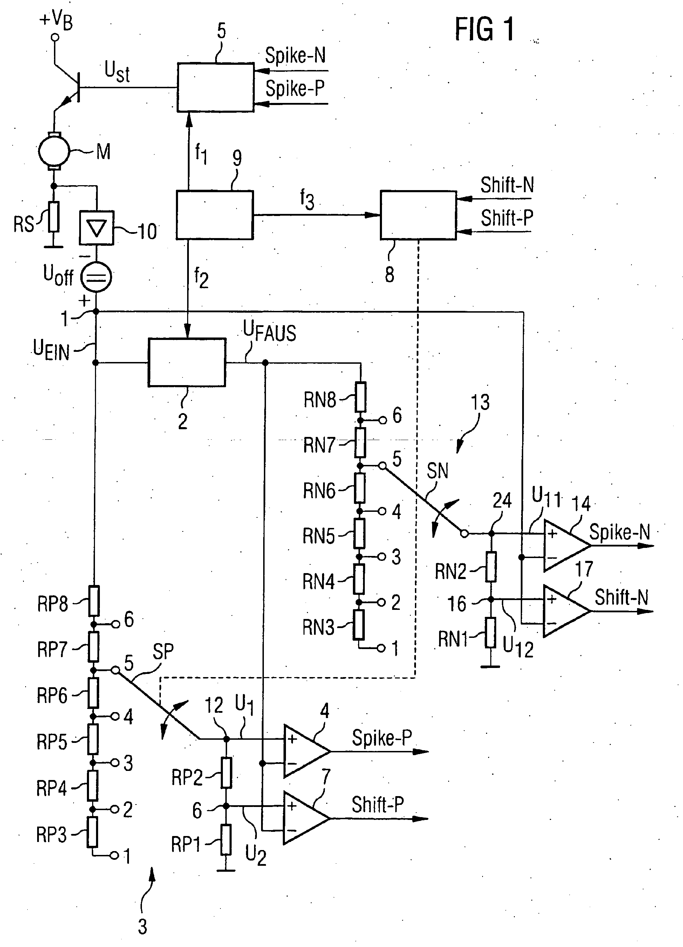

Im ersten Ausführungsbeispiel gemäß Figur 1 werden sowohl positive als auch negative Kommutierungsimpulse, im folgenden Spikes genannt, ausgewertet.

Das von einem Strommeßwiderstand R_{S} kommende und verstärkte Eingangssignal wird von einem Tiefpaßfilter 2 großer Steilheit gefiltert. Die Grenzfrequenz muß so eingestellt werden, daß der niederfrequente Lüfterstromanteil, der durch die Gegen-EMK verursacht wird, ohne nennenswerte Änderung passieren kann, während der höherfrequente Lüfterstromanteil, der durch die interne Umschaltung der Lüfterantriebsspule (Kommutierungsimpulse) entsteht, unterdrückt wird.

Um auf der einen Seite verschiedene Lüftertypen und Lüfterfabrikate ohne Einstellungsänderung betreiben zu können, auf der anderen Seite aber bei Betriebsspannungssprüngen und blockiertem Lüfter keine Fehlimpulse mehr auszulösen muß dieses Filter 2 recht genau dimensioniert werden. Bei Drehzahländerungen wird in diesem Ausführungsbeispiel auch die Filtergrenzfrequenz nachgeführt werden, daher sollte für dieses Filter 2 ein "Switched capacitor filter" verwendet werden. Ein Taktgenerator 9, der über einen Frequenzteiler die Drehzahl eines Lüfters M vorgibt, kann mit einem geeignet angepaßten anderen Frequenzteiler das Filter 2 steuern.

Um sowohl Lüfter M mit positiven als auch mit negativen Kommutierungsimpulsen in der Drehzahl zu erfassen, teilt sich die Schaltungsanordnung in zwei gleichberechtigte Teile auf, einen Schaltungsteil für positive Spikes und einen Schaltungsteil für negative Spikes.

### Der Bereich für positive Spikes arbeitet wie folgt:

Aus der momentanen Eingangsspannung U_{EIN}, also der Spannung, die den aktuellen Lüfterstrom darstellt, wird durch eine umschaltbare Kette von Vorwiderständen RP8..RP3, die Teil eines Spannungsteilers 3 sind, an einem ersten Abgriff 12 eine erste Spannung U1 gebildet und auf einen ersten Komparator 4 gegeben. An einem zweiten Abgriff 6 wird eine zweite Spannung U2 gebildet und auf einen zweiten Komparator 7 gegeben.

Für die folgende Erklärung sei beispielhaft angenommen, daß die Spannungsteiler-Widerstandswerte RP1 und RP2 = 2*R sind, die Werte RP3 bis RP8 alle gleich R sind. Weiterhin sei angenommen, der Umschalter SP sei auf seiner obersten Stellung, verbindet also RP8 mit RP2.

Der Komparator 4 vergleicht daher die mit einem Faktor x=4R/5R multiplizierte momentane Eingangsspannung U_{EIN} mit der Filterausgangsspannung U_{FAUS}. Übersteigt dieser Anteil der Eingangsspannung U_{EIN} die aktuelle Filterausgangsspannung U_{FAUS}, wird der Komparator 4 am Ausgang mit einem Signal Spike-P einen Kommutierungsimpuls melden. Mit anderen Worten ausgedrückt bedeutet das, daß jeder Momentanwert der Eingangsspannung U_{EIN}, der 5/4 = 125% der Filterausgangsspannung U_{FAUS} übersteigt, als Kommutierung gemeldet wird. Manche Lüfter haben jedoch deutlich höhere Spike-Prozentwerte, gleichzeitig aber auch relativ hohe und schnelle Gegen-EMK-Prozentwerte, die evtl. 125% erreichen könnten. Daher muß der Prozentsatz, ab der eine Momentanwertabweichung der Eingangsspannung U_{EIN} von der Filterausgangsspannung U_{FAUS} als Kommutierung gemeldet wird, dem höchsten aktuell vorkommenden Spikewert angepaßt werden.

Dies erfolgt über den zweiten Komparator 7. Der Komparator 7 vergleicht die mit einem zweiten, kleineren Faktor, z.B. y=2R/5R, multiplizierte momentane Eingangsspannung U_{EIN} mit der Filterausgangsspannung U_{FAUS}. Übersteigt dieser Anteil der Eingangsspannung U_{EIN} die aktuelle Filterausgangsspannung U_{FAUS}, wird der Komparator 7 ein Signal Shift-P ausgeben, das über die Steuereinrichtung 8 die Position des Schalters SP um eine Position nach unten bewegt. Mit anderen Worten ausgedrückt bedeutet das, daß jeder Momentanwert der Eingangsspannung U_{EIN}, der y=5/2=250% der Filterausgangsspannung U_{FAUS} übersteigt, den Schalter SP von der sechsten Position auf die fünfte Position schalten wird. Daher sind die neuen Vergleichswerte der beiden Komparatoren 4 und 7 wie folgt eingestellt:

Der erste Komparator 4 vergleicht nun die mit einem Faktor x=4R/6R multiplizierte momentane Eingangsspannung mit der Filterausgangsspannung U_{FAUS}. Das bedeutet, daß jeder Momentanwert der Eingangsspannung U_{EIN}, der 6/4 = 150% der Filterausgangsspannung U_{FAUS} übersteigt, als Kommutierung gemeldet wird.

Der zweite Komparator 7 vergleicht nun die mit einem Faktor y=2R/6R multiplizierte momentane Eingangsspannung U_{EIN} mit der Filterausgangsspannung. Das bedeutet, daß jede momentane Eingangsspannung, die 6/2 = 300% der Filterausgangsspannung übersteigt, den Schalter SP von der fünften Position auf die vierte Position schalten wird.

Entsprechend verhalten sich die weiteren Schaltstufen.

In der vierten Schalterstufe vergleicht der erste Komparator 4 die mit einem Faktor (=4R/7R) multiplizierte momentane Eingangsspannung U_{EIN} mit der Filterausgangsspannung U_{FAUS}. Das bedeutet, daß jede momentane Eingangsspannung U_{EIN}, die 7/4 = 175% der Filterausgangsspannung U_{FAUS} übersteigt, als Kommutierung gemeldet wird. Der zweite Komparator 7 vergleicht die mit einem Faktor y=2R/7R multiplizierte momentane Eingangsspannung U_{EIN} mit der Filterausgangsspannung U_{FAUS}. Das bedeutet, daß jede momentane Eingangsspannung U_{EIN}, die 7/2 = 350% der Filterausgangsspannung U_{FAUS} übersteigt, den Schalter SP von der vierten Position auf die dritte Position schalten wird.

In der dritten Schalterstufe vergleicht der erste Komparator 4 die mit einem Faktor x=4R/8R multiplizierte momentane Eingangsspannung U_{EIN} mit der Filterausgangsspannung U_{FAUS}. Das bedeutet, daß jede momentane Eingangsspannung U_{EIN}, die 8/4 = 200% der Filterausgangsspannung U_{FAUS} übersteigt, als Kommutierung gemeldet wird. Der zweite Komparator 7 vergleicht die mit einem Faktor y=2R/8R multiplizierte momentane Eingangsspannung U_{EIN} mit der Filterausgangsspannung U_{FAUS}. Das bedeutet, daß jede momentane Eingangsspannung U_{EIN}, die 8/2 = 400% der Filterausgangsspannung U_{FAUS} übersteigt, den Schalter SP von der dritten Position auf die zweite Position schalten wird.

In der zweiten Schalterstufe vergleicht der erste Komparator 4 die mit einem Faktor x=4R/9R multiplizierte momentane Eingangsspannung U_{EIN} mit der Filterausgangsspannung U_{FAUS}. Das bedeutet, daß jede momentane Eingangsspannung U_{EIN}, die 9/4 = 225% der Filterausgangsspannung U_{FAUS} übersteigt, als Kommutierung gemeldet wird. Der zweite Komparator 7 vergleicht die mit einem Faktor y=2R/8R der momentane Eingangsspannung U_{EIN} mit der Filterausgangsspannung U_{FAUS}. Das bedeutet, daß jede momentane Eingangsspannung U_{EIN}, die 9/2 = 450% der Filterausgangsspannung U_{FAUS} übersteigt, den Schalter SP von der zweiten Position auf die erste Position schalten wird.

In der ersten Schalterstufe vergleicht der erste Komparator 4 die mit einem Faktor x=4R/10R multiplizierte momentane Eingangsspannung U_{EIN} mit der Filterausgangsspannung U_{FAUS}. Das bedeutet, daß jede momentane Eingangsspannung U_{EIN}, die 10/4 = 250% der Filterausgangsspannung U_{FAUS} übersteigt, als Kommutierung gemeldet wird.

Der Bereich für negative Spikes ist nahezu identisch aufgebaut und arbeitet wie folgt:

Aus der momentanen Filterausgangsspannung U_{FAUS}, also der Spannung, die den gefilterten Lüfterstrom darstellt, wird durch eine umschaltbare Kette von Vorwiderständen RN8 ...RN3, die Teil eines Spannungsteilers 3 sind, an einem ersten Abgriff 24 eine erste Spannung U11 gebildet und auf einen ersten Komparator 14 gegeben. An einem zweiten Abgriff 16 wird eine zweite Spannung U12 gebildet und auf einen zweiten Komparator 17 gegeben.

Für die folgende Erklärung sei beispielhaft angenommen, daß die Werte RN1 und RN2 = 2*R sind, die Werte RN3 bis RN8 alle gleich R sind.

Weiterhin sei angenommen, der Umschalter SN sei auf seiner obersten Stellung, verbindet also RN8 mit RN2.

Der erste Komparator 14 vergleicht daher die mit einem Faktor x=4R/5R multiplizierte momentane Filterausgangsspannung U_{FAUS} mit der Eingangsspannung U_{EIN}. Übersteigt dieser Anteil der Filterausgangsspannung U_{FAUS} den aktuellen Momentanwert der Eingangsspannung U_{EIN}, wird der erste Komparator 14 am Ausgang mit einem Signal Spike-N einen Kommutierungsimpuls melden. Mit anderen Worten ausgedrückt bedeutet das, daß jede momentane Eingangsspannung U_{EIN}, die einen Wert unterhalb 4/5 = 80% der Filterausgangsspannung U_{FAUS} annimmt, als Kommutierung gemeldet wird.

Auch bei negativen Spikes ist eine automatische Anpassung an den eingesetzten Lüftertyp erforderlich. Dies erfolgt über den zweite Komparator 17. Der zweite Komparator 17 vergleicht die mit einem zweiten, niedrigeren Faktor, z.B. y=2R/5R multiplizierte momentane Filterausgangsspannung U_{FAUS} mit dem Momentanwert der Eingangsspannung U_{EIN}. Übersteigt dieser Anteil der Filterausgangsspannung U_{FAUS} den aktuellen Momentanwert der Eingangsspannung U_{EIN}, wird der zweite Komparator 17 ein Signal Shift-N ausgeben, das über die Steuereinrichtung 8 die Position des Schalters SN um eine Position nach unten bewegt. Mit anderen Worten ausgedrückt bedeutet das, daß jede momentane Eingangsspannung U_{EIN}, die einen Wert unter 2/5 = 40% der Filterausgangsspannung U_{FAUS} annimmt, den Schalter SN von der sechsten Position auf die fünfte Position schalten wird. Daher sind die neuen Vergleichswerte der beiden Komparatoren 14 und 17 wie folgt eingestellt:

Der erste Komparator 14 vergleicht nun die mit einem Faktor x=4R/6R multiplizierte momentane Filterausgangsspannung U_{FAUS} mit dem Momentanwert der Eingangsspannung U_{EIN}. Das bedeutet, daß jede momentane Eingangsspannung U_{EIN}, die einen Wert unterhalb 4/6 = 67% der Filterausgangsspannung U_{FAUS} annimmt, als Kommutierung gemeldet wird. Der zweite Komparator 17 vergleicht nun die mit einem Faktor y=2R/6R multiplizierte momentane Filterausgangsspannung U_{FAUS} mit dem Momentanwert der Eingangsspannung U_{EIN}. Das bedeutet, daß jede momentane Eingangsspannung U_{EIN}, die einen Wert unterhalb 2/6 = 33% der Filterausgangsspannung U_{FAUS} annimmt, den Schalter SN von der fünften Position auf die vierte Position schalten wird.

Entsprechend verhalten sich die weiteren Schaltstufen:

In der vierten Schalterstufe vergleicht der erste Komparator 14 die mit einem Faktor x=4R/7R multiplizierte momentane Filterausgangsspannung U_{FAUS} mit dem Momentanwert der Eingangsspannung U_{EIN}. Das bedeutet, daß jede momentane Eingangsspannung U_{EIN}, die 4/7 = 57% der Filterausgangsspannung U_{FAUS} unterschreitet, als Kommutierung gemeldet wird. Der zweite Komparator 17 vergleicht die mit einem Faktor y=2R/7R multiplizierte momentane Filterausgangsspannung U_{FAUS} mit dem Momentanwert der Eingangsspannung U_{EIN}. Das bedeutet, daß jede momentane Eingangsspannung U_{EIN}, die 2/7 = 28% der Filterausgangsspannung U_{FAUS} unterschreitet, den Schalter SN von der vierten Position auf die dritte Position schalten wird.

In der dritten Schalterstufe vergleicht der erste Komparator 14 die mit einem Faktor x=4R/8R multiplizierte momentane Filterausgangsspannung U_{FAUS} mit dem Momentanwert der Eingangsspannung U_{EIN}. Das bedeutet, daß jede momentane Eingangsspannung U_{EIN}, die 4/8 = 50% der Filterausgangsspannung U_{FAUS} unterschreitet, als Kommutierung gemeldet wird. Der zweite Komparator 17 vergleicht die mit einem Faktor y=2R/8R multiplizierte momentane Filterausgangsspannung U_{FAUS} mit dem Momentanwert. Das bedeutet, daß jede momentane Eingangsspannung U_{EIN}, die 2/8 = 25% des Filterausgangsspannung U_{FAUS} unterschreitet, den Schalter SN von der dritten Position auf die zweite Position schalten wird.

In der zweiten Schalterstufe vergleicht der erste Komparator 14 die mit einem Faktor x=4R/9R multiplizierte momentane Filterausgangsspannung U_{FAUS} mit dem Momentanwert der Eingangsspannung U_{EIN}. Das bedeutet, daß jede momentane Eingangsspannung U_{EIN}, die 4/9 = 44% der Filterausgangsspannung U_{FAUS} unterschreitet, als Kommutierung gemeldet wird. Der zweite Komparator 17 vergleicht die mit einem Faktor y=2R/8R multiplizierte momentane Filterausgangsspannung U_{FAUS} mit dem Momentanwert der Eingangsspannung U_{EIN}. Das bedeutet, daß jede momentane Eingangsspannung U_{EIN}, die 2/9 = 22% des Filterausgangsspannung U_{FAUS} unterschreitet, den Schalter SN von der zweiten Position auf die erste Position schalten wird.

In der ersten Schalterstufe vergleicht der Komparator 14 die mit einem Faktor x=4R/10R multiplizierte momentane Filterausgangsspannung U_{FAUS} mit dem Momentanwert der Eingangsspannung U_{EIN}. Das bedeutet, daß jede momentane Eingangsspannung U_{EIN}, die 4/10 = 40% der Filterausgangsspannung U_{FAUS} unterschreitet, als Kommutierung gemeldet wird.

Die Ausgänge der Komparatoren 4 und 14 werden ODER-verknüpft, um sowohl positive als auch negative Lüfterimpulse zu detektieren.

Die Signale Shift-N und Shift-P sind ODER-verknüpft und werden als Eingangssignal auf die Steuereinrichtung 8 gegeben. Die Steuereinrichtung 8 schaltet bei jedem Schaltimpuls Shift-P oder Shift-N die Schalter SP und SN um eine Position herunter. Das Hochschalten der beiden Schalter erfolgt über eine Taktfrequenz f3. Ist nach einer Anzahl von f3-Taktimpulsen, die der Zeit von z.B. zwei Umdrehungen des Lüfters M entspricht, kein erneuter Schaltimpuls Spike-P oder Spike-N der Komparatoren 4 oder 14 eingetroffen, schaltet die Steuereinrichtung 8 um eine Position herauf und erhöht damit wieder die Empfindlichkeit der Schaltung.

Im eingeschwungenen Betrieb wird daher die Steuereinrichtung 8 zwischen zwei Schalterstellungen hin und her wechseln, wenn die Momentanwertamplitude die Schwelle für die Erkennung von positiven oder negativen Spikes immer wieder überschreitet.

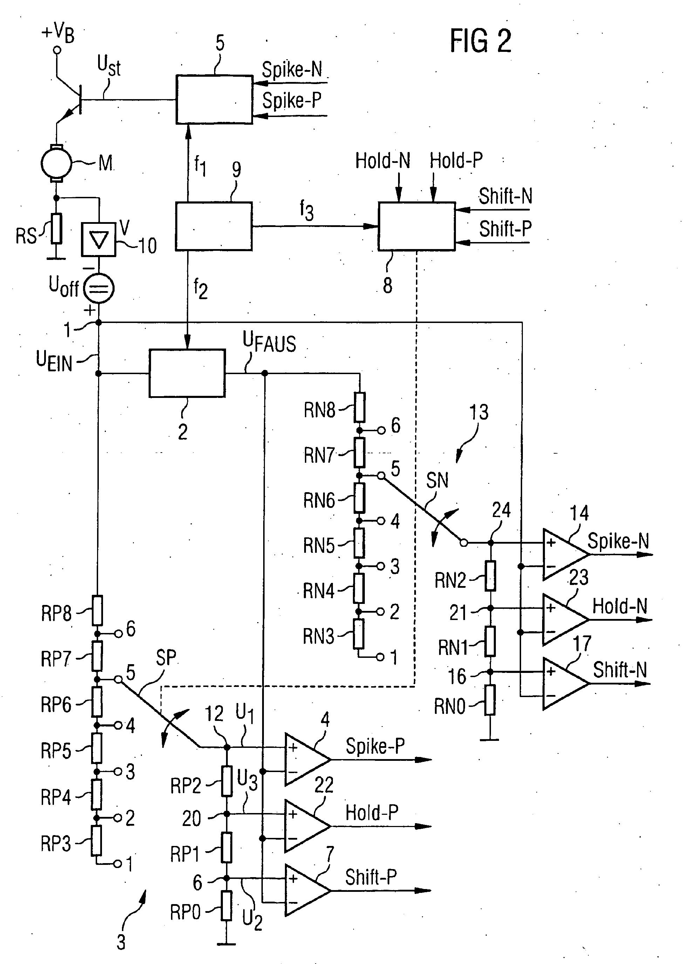

In einem zweiten; weitergebildeten Ausführungsbeispiel gemäß Figur 2 kann man das "Hin und her wechseln" der Schalterstellungen unterbinden, indem je ein weiterer Hold-Komparator genannter Komparator 22 und 23 zwischen den Komparatoren 4 und 7 beziehungsweise 14 und 17 eingefügt und mit einem zusätzlichen Abgriff 20 beziehungsweise 21 des jeweiligen Spannungsteilers verbunden wird. Diese Hold-Komparatoren 22 und 23 haben somit eine Schaltschwelle zwischen den Komparatoren 4 und 7 beziehungsweise 14 und 17. Ihre Aufgabe ist es, einen internen Zähler der f3-Impulse, der sich in der Steuereinrichtung 8 befindet, bei jedem erkannten Impuls zurückzusetzen. Damit gibt es drei Bedingungen für die Schalterstellung von SP und SN:

Erreicht ein Impuls die Schaltschwelle eines für die Umschaltung zuständigen Shift-Komparators 7 oder 17, schaltet die Steuereinrichtung 8 um eine Schalterstellung nach unten, die Kommutierungserkennung wird also unempfindlicher. Liegt der Pegel eines Impulses unter der Schaltschwelle eines Shift-Komparators, aber über der Schaltschwelle des Hold-Komparators, setzt die Steuereinrichtung 8 den internen Zähler für die Aufwärtsschaltung zurück und wartet erneut ca. zwei Umdrehungen, bis sie die Schalterstellung nach oben setzen würde.

Liegt der Pegel eines Impulses unter der Schaltschwelle des jeweiligen Hold-Komparators, aber über der Schaltschwelle des Spike-Komparators, wartet die Steuereinrichtung 8 auf ca. zwei Umdrehungen des Lüfters, ist bis dahin kein Signal von den Hold-Komparatoren 22 und 23 gekommen, setzt sie die Schalterstellung um eine Stufe nach oben.

Die beiden Schalter SN und SP haben immer die gleiche Schalterstellung, um sicherzustellen, daß ein Lüfter M mit hohen negativen Spikes nicht auf kleine fehlerhafte positive Spikes reagiert, was bei unabhängiger Schalterstellung durchaus vorkommen könnte.

Die unterste Spannung für die Eingangsspannung U_{EIN} muß größer Null sein, z.B. 100 mV, da bei einer Spannung von 0 mV die Komparatoren 0 mit 0 vergleichen würden, was falsche Ausgangssignale bewirken würde. Daher wird der erfaßten und eventuell von einem Verstärker V verstärkten Spannung am Meßwiderstand R_{S} eine Offset-Spannung U_{off} addiert.

Wird bei einer maximalen erlaubten Betriebsspannungsschwankung von +/- 5% die unterste Stromschaltschwelle auf z.B. +/- 25 % oder mehr eingestellt, kann bei Betriebsspannungssprüngen und blockiertem Lüfter kein Fehlimpuls mehr ausgelöst werden, da die durch die Betriebsspannungsschwankungen erzeugten Stromschwankungen unter 25% liegen werden.

Diese Erkennung hängt nicht mehr vom absoluten Wert des Lüfterversorgungsstroms ab, ist also für alle Lüftergrößen ohne Anpassung geeignet.

### Bezugszeichenliste

- 1: Eingang
- 2: Tiefpaß-Filter
- 3: Spannungsteiler
- 4: Vergleichsvorrichtung
- 5: Regler
- 6: zweiter Abgriff
- 7: zweite Vergleichsvorrichtung
- 8: Steuereinrichtung
- 9: Taktgenerator
- 10: Verstärker
- 11: Transistor
- 12: erster Abgriff
- 13: Spannungsteiler
- 14: erste Vergleichsvorrichtung
- 16: zweiter Abgriff
- 17: zweite Vergleichsvorrichtung
- 20: dritter Abgriff
- 21: dritter Abgriff
- 22: dritte Vergleichsvorrichtung
- 23: dritte Vergleichsvorrichtung
- 24: erster Abgriff
- Spike-P: positives kommutierungspulsanzeigendes Signal
- Shift-P: Änderung der Faktoren auslösendes Signal
- Hold-P: Haltesignal
- Spike-N: negatives kommutierungspulsanzeigendes Signal
- Shift-N: Änderung der Faktoren auslösendes Signal
- Hold-N: Haltesignal
- U_{OFF}: Offsetspannung
- U_{EIN}: Eingangsspannung
- U_{FAUS}: Filterausgangsspannung
- U_{ST}: Steuerspannung
- U1, U11: erste Spannung
- U2, U12: zweite Spannung
- U3, U13: dritte Spannung
- RP0..RP8: Widerstände
- RN0..RN8: Widerstände
- SP: Umschalter
- SN: Umschalter
- M: Lüfter

## Patentansprüche

1. Schaltungsanordnung zur Lüfterregelung mit
- einem Eingang (1) zum Empfang einer einem Lüfterstrom proportionalen Eingangsspannung (U_{EIN}), die eine erste Vergleichsspannung bildet,
- einem Tiefpaß-Filter (2), das die Eingangsspannung (U_{EIN}) filtert und an dessen Ausgang eine Filterausgangsspannung (U_{FAUS}) als zweite Vergleichsspannung abgreifbar ist,
- einer ersten Vergleichsvorrichtung (4) zur Kommutierungserkennung, die an ihrem Ausgang ein eine Kommutierung anzeigendes Signal (Spike-P, Spike-N) ausgibt, wenn der mit einen ersten Faktor multiplizierte Wert einer der Vergleichsspannungen (U1) größer als die andere Vergleichsspannung (U_{FAUS}, U_{EIN}) ist, und
- einem Regler (5), der in Abhängigkeit erkannter Kommutierungsimpulse eine Lüftersteuerspannung (Uₛₜ) ausgibt,
**dadurch gekennzeichnet, daß**
- eine zweite Vergleichsvorrichtung (7) vorgesehen ist, die an ihrem Ausgang mit einem Ausgangssignal (Shift-P, Shift-N) anzeigt, wenn der mit einem zweiten Faktor multiplizierte Wert einer der Vergleichsspannungen (U2) größer als die andere Vergleichsspannung (U_{FAUS}, U_{EIN}) ist, wobei der zweite Faktor kleiner als der erste Faktor ist, und
- eine Steuereinrichtung (8) vorgesehen ist, durch die der erste und der zweite Faktor bei Empfang eines Ausgangssignals (Shift-P, Shift-N) der zweiten Vergleichsvorrichtung (7, 17) verkleinerbar sind zur Verringerung der Empfindlichkeit der Kommutierungserkennung.

2. Schaltungsanordnung nach Anspruch 1,
**dadurch gekennzeichnet, daß** die Multiplikation einer der Vergleichsspannungen (U_{EIN}, U_{FAUS}) mit einem Faktor durch einen Abgriff an einem Spannungsteiler (3) erfolgt.

3. Schaltungsanordnung nach Anspruch 2,
**dadurch gekennzeichnet, daß** die Multiplikation mit dem ersten Faktor durch einen ersten Abgriff und die Multiplikation mit dem zweiten Faktor durch einen zweiten Abgriff an dem Spannungsteiler (3) erfolgt.

4. Schaltungsanordnung nach Anspruch 2 oder 3,
**dadurch gekennzeichnet, daß** das Teilerverhältnis an den Abgriffen des Spannungsteilers durch das Zu- bzw. Abschalten zusätzlicher Widerstände (RP3 .. PR7) oberhalb des ersten Abgriffs einstellbar ist..

5. Schaltungsanordnung nach einem der Ansprüche 1 bis 4,
**dadurch gekennzeichnet, daß**
- eine dritte Vergleichsvorrichtung (22, 23) vorgesehen ist, die an ihrem Ausgang mit einem Ausgangssignal (Hold-P, Hold-N) anzeigt, wenn der mit einem dritten Faktor multiplizierte Wert einer der Vergleichsspannungen (U3) größer als die andere Vergleichsspannung (U_{FAUS}, U_{EIN}) ist, wobei der dritte Faktor kleiner als der erste Faktor und größer als der zweite Faktor ist, und
- eine Verkleinerung des ersten und zweiten Faktors durch die Steuereinrichtung (8) verzögert wird und nur dann erfolgt, wenn zum Zeitpunkt eines erwarteten nachfolgenden Kommutierungsimpulses wieder ein Ausgangssignal (Shift-P, Shift-N) des zweiten Komparators (7, 17) vorliegt.

6. Schaltungsanordnung nach Anspruch 5,
**dadurch gekennzeichnet, daß** die Multiplikation mit dem dritten Faktor durch einen dritten Abgriff zwischen dem ersten und dem zweiten Abgriff an dem Spannungsteilers erfolgt.

7. Schaltungsanordnung nach einem der Ansprüche 1 bis 6,
**dadurch gekennzeichnet, daß** die Filterfrequenz des Filters (2) einstellbar ist und Mittel vorgesehen sind zur Einstellung der Filterfrequenz in Abhängigkeit der Drehzahl eines angeschlossenen Lüfters (M).

8. Schaltungsanordnung nach einem der Ansprüche 1 bis 7,
**dadurch gekennzeichnet, daß** ein Taktgenerator vorgesehen ist, der den Regler (5), die Steuereinrichtung (8) und das Filter (2) mit Taktsignalen versorgt, deren Frequenzen (f1, f2, f3) in einem festen Verhältnis zueinander stehen.

9. Schaltungsanordnung nach einem der Ansprüche 1 bis 8,
**dadurch gekennzeichnet, daß** zur Erkennung positiver Kommutierungsimpulse die Eingangsspannung (U_{EIN}) die Vergleichsspannung ist, die mit dem ersten und zweiten Faktor multipliziert wird, und die andere Vergleichsspannung die Filterausgangsspannung (U_{FAUS}) ist.

10. Schaltungsanordnung nach einem der Ansprüche 1 bis 8,
**dadurch gekennzeichnet, daß** zur Erkennung negativer Kommutierungsimpulse die Filterausgangsspannung (U_{FAUS}) die Vergleichsspannung ist, die mit dem ersten und zweiten Faktor multipliziert wird, und die andere Vergleichsspannung die Eingangsspannung (U_{EIN}) ist.

11. Schaltungsanordnung zur Erkennung positiver und negativer Kommutierungsimpulse,
**gekennzeichnet durch** eine Schaltungsanordnung nach Anspruch 9 und eine Schaltungsanordnung nach Anspruch 10.

## Claims

1. Circuit arrangement for fan regulation having
- an input (1) for receiving an input voltage (U_{IN}), which is proportional to a fan current and forms a first comparison voltage,
- a low-pass filter (2), which filters the input voltage (U_{IN}) and at the output of which a filter output voltage (U_{FOUT}) can be tapped off as second comparison voltage,
- a first comparison device (4) for commutation identification, which outputs at its output a signal (spike-P, spike-N) indicating a commutation if the value of one of the comparison voltages (U1) multiplied by a first factor is greater than the other comparison voltage (U_{FOIT}, U_{IN}), and
- a regulator (5), which outputs a fan control voltage (U_{c}) in a manner dependent on identified commutation pulses,
**characterized in that**
- a second comparison device (7) is provided, which indicates at its output with an output signal (shift-P, shift-N) if the value of one of the comparison voltages (U2) multiplied by a second factor is greater than the other comparison voltage (U_{FOUT}, U_{IN}), the second factor being less than the first factor, and
- a control device (8) is provided, by means of which the first and second factors can be decreased in the event of an output signal (shift-P, shift-N) of the second comparison device (7, 17) being received, in order to reduce the sensitivity of the commutation identification.

2. Circuit arrangement according to Claim 1,
**characterized in that** the multiplication of one of the comparison voltages (U_{IN}, U_{FOUT}) by a factor is effected by a tap at a voltage divider (3).

3. Circuit arrangement according to Claim 2,
**characterized in that** the multiplication by the first factor is effected by a first tap and the multiplication by the second factor by a second tap at the voltage divider (3).

4. Circuit arrangement according to Claim 2 or 3,
**characterized in that** it is possible to set the divider ratio at the taps of the voltage divider by additional resistors (RP3 ... PR7) being switched in or out above the first tap.

5. Circuit arrangement according to one of Claims 1 to 4,
**characterized in that**
- a third comparison device (22, 23) is provided, which indicates at its output with an output signal (hold-P, hold-N) if the value of one of the comparison voltages (U3) multiplied by a third factor is greater than the other comparison voltage (U_{FOUT}, U_{IN}), the third factor being less than the first factor and greater than the second factor, and
- a decrease of the first and second factors by the control device (8) is delayed and is effected only when an output signal (shift-P, shift-N) of the second comparator (7, 17) is present again at the point in time of an expected subsequent commutation pulse.

6. Circuit arrangement according to Claim 5,
**characterized in that** the multiplication by the third factor is effected by a third tap between the first and second taps at the voltage divider.

7. Circuit arrangement according to one of Claims 1 to 6,
**characterized in that** the filter frequency of the filter (2) can be set and means are provided for setting the filter frequency in a manner dependent on the rotational speed of a connected fan (M).

8. Circuit arrangement according to one of Claims 1 to 7,
**characterized in that** a clock generator is provided, which supplies the regulator (5), the control device (8) and the filter (2) with clock signals whose frequencies (fl, f2, f3) are in a fixed ratio to one another.

9. Circuit arrangement according to one of Claims 1 to 8,
**characterized in that,** in order to identify positive commutation pulses, the input voltages (U_{IN}) is the comparison voltage which is multiplied by the first and second factors, and the other comparison voltage is the filter output voltage (U_{FOUT}).

10. Circuit arrangement according to one of Claims 1 to 8,
**characterized in that,** in order to identify negative commutation pulses, the filter output voltage (U_{FOUT}) is the comparison voltage which is multiplied by the first and second factors, and the other comparison voltage is in the input voltage (U_{IN}).

11. Circuit arrangement for identifying positive and negative commutation pulses,
**characterized by** a circuit arrangement according to Claim 9 and a circuit arrangement according to Claim 10.

## Revendications

1. Arrangement de circuit pour la régulation d'un ventilateur comprenant
- une entrée (1) destinée à recevoir une tension d'entrée (U_{EIN}) proportionnelle à un courant de ventilateur et qui forme une première tension de comparaison,
- un filtre passe-bas (2) qui filtre la tension d'entrée (U_{EIN}) et à la sortie duquel peut être prélevée une tension de sortie de filtre (U_{FAUS}) en tant que deuxième tension de comparaison,
- un premier dispositif de comparaison (4) destiné à détecter la commutation et qui délivre à sa sortie un signal (Spike-P, Spike-N) indiquant une commutation lorsque la valeur de l'une des tensions de comparaison multipliée par un premier facteur (U1) est supérieure à l'autre tension de comparaison (U_{FAUS}, U_{EIN}) et
- un régulateur (5) qui délivre une tension de commande de ventilateur (Uₛₜ) en fonction de l'impulsion de commutation détectée,
**caractérisé en ce que**
- il est prévu un deuxième dispositif de comparaison (7) qui signale à sa sortie, avec un signal de sortie (Shift-P, Shift-N), lorsque la valeur de l'une des tensions de comparaison multipliée par un deuxième facteur (U2) est supérieure à l'autre tension de comparaison (U_{FAUS}, U_{EIN}), le deuxième facteur étant inférieur au premier facteur et
- il est prévu un dispositif de commande (8) qui permet de réduire le premier et le deuxième facteur lors de la réception d'un signal de sortie (Shift-P, Shift-N) du deuxième dispositif de comparaison (7, 17) afin de diminuer la sensibilité de la détection de commutation.

2. Arrangement de circuit selon la revendication 1, **caractérisé en ce que** la multiplication de l'une des tensions de comparaison (U_{EIN}, U_{FAUS}) avec un facteur s'effectue par une prise sur un diviseur de tension (3).

3. Arrangement de circuit selon la revendication 2, **caractérisé en ce que** la multiplication par le premier facteur s'effectue par une première prise et la multiplication par le deuxième facteur par une deuxième prise sur le diviseur de tension (3).

4. Arrangement de circuit selon la revendication 2 ou 3, **caractérisé en ce que** le rapport de division au niveau des prises du diviseur de tension peut être réglé en connectant ou en déconnectant des résistances supplémentaires (RP3 ... PR7) au-dessus de la première prise.

5. Arrangement de circuit selon l'une des revendications 1 à 4, **caractérisé en ce que**
- il est prévu un troisième dispositif de comparaison (22, 23) qui signale à sa sortie, avec un signal de sortie (Hold-P, Hold-N), lorsque la valeur de l'une des tensions de comparaison multipliée par un troisième facteur (U3) est supérieure à l'autre tension de comparaison (U_{FAUS}, U_{EIN}), le troisième facteur étant inférieur au premier facteur et supérieur au deuxième facteur, et
- une réduction du premier et du deuxième facteur par le dispositif de commande (8) est retardée et n'a lieu que lorsqu'un signal de sortie (Shift-P, Shift-N) du deuxième comparateur (7, 17) est de nouveau présent au moment d'une impulsion de commutation suivante attendue.

6. Arrangement de circuit selon la revendication 5, **caractérisé en ce que** la multiplication avec le troisième facteur s'effectue par une troisième prise entre la première et la deuxième prises sur le diviseur de tension.

7. Arrangement de circuit selon l'une des revendications 1 à 6, **caractérisé en ce que** la fréquence de filtrage du filtre (2) est réglable et des moyens sont prévus pour régler la fréquence du filtre en fonction de la vitesse de rotation d'un ventilateur (M) qui est raccordé.

8. Arrangement de circuit selon l'une des revendications 1 à 7, **caractérisé en ce qu'**il est prévu un générateur d'horloge qui alimente le régulateur (5), le dispositif de commande (8) et le filtre (2) avec des signaux d'horloge dont les fréquences (fl, f2, f3) sont en relation entre elles selon un rapport fixe.

9. Arrangement de circuit selon l'une des revendications 1 à 8, **caractérisé en ce que** pour détecter une impulsion de commutation positive, la tension d'entrée (U_{EIN}) est la tension de comparaison qui est multipliée par le premier et le deuxième facteurs et l'autre tension de comparaison est la tension de sortie du filtre (U_{FAUS}).

10. Arrangement de circuit selon l'une des revendications 1 à 8, **caractérisé en ce que** pour détecter une impulsion de commutation négative, la tension de sortie du filtre (U_{FAUS}) est la tension de comparaison qui est multipliée par le premier et le deuxième facteurs et l'autre tension de comparaison est la tension d'entrée (U_{EIN}).

11. Arrangement de circuit pour détecter des impulsions de commutation positives et négatives, **caractérisé par** un arrangement de circuit selon la revendication 9 et un arrangement de circuit selon la revendication 10.
